# EUROPÄISCHE PATENTSCHRIFT

(11) **EP 3 443 645 B1**
(45) Veröffentlichungstag und Bekanntmachung des Hinweises auf die Patenterteilung: **11.03.2020**
(21) Anmeldenummer: 17721046.5
(22) Anmeldetag: 07.04.2017
(51) Int. Cl.: H02K 11/05, H02K 5/22, H02K 9/18

(54) **HYBRIDANTRIEBSMODUL FÜR EINEN KRAFTFAHRZEUGANTRIEBSSTRANG**
HYBRID DRIVE MODULE FOR A MOTOR VEHICLE DRIVETRAIN
MODULE D'ENTRAÎNEMENT HYBRIDE POUR CHAÎNE CINÉMATIQUE DE VEHICULE AUTOMOBILE

(30) Priorität: 12.04.2016 DE 102016004435
(43) Veröffentlichungstag der Anmeldung: 20.02.2019
(73) Patentinhaber: Daimler AG, 70372 Stuttgart (DE)
(72) Erfinder: HAERTER, Tobias, 70174 Stuttgart (DE); MAISCH, Matthias, 71069 Sindelfingen (DE); MATENA, Uwe, 71522 Backnang (DE); NISCH, Alexander, 72108 Rottenburg (DE); SPENGEL, Christoph, 72669 Unterensingen (DE); WEIGOLD, Jörg, 70327 Stuttgart (DE)
(74) Vertreter: JENSEN & SON
(86) Internationale Anmeldenummer: PCT/EP2017/000440
(87) Internationale Veröffentlichungsnummer: WO 2017/178103

(56) Entgegenhaltungen:
- EP-A2- 1 049 234
- DE-A1-102010 008 584

## Beschreibung

Die Erfindung betrifft ein Hybridantriebsmodul für einen Kraftfahrzeugantriebsstrang.

Aus der EP 2 907 688 A1 ist bereits ein Hybridantriebsmodul für einen Kraftfahrzeugantriebsstrang, mit zumindest einem Gehäuseteil zur Aufnahme von zumindest einem Elektromotor, mit zumindest einem Inverter, der als Spannungswandler für den Elektromotor vorgesehen ist, mit einem Wärmeübertrager, der dazu vorgesehen ist, Wärmeenergie von einem ersten Kühlmedium auf ein zweites Kühlmedium zu übertragen, bekannt.

Aus der gattungsgemäßen DE 10 2010 008 584 A1 ist ebenfalls ein derartiges Hybridantriebsmodul bekannt.

Der Erfindung liegt insbesondere die Aufgabe zugrunde, ein flexibel einsetzbares, einfach zu montierendes Hybridantriebsmodul bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einem Hybridantriebsmodul für einen Kraftfahrzeugantriebsstrang, mit zumindest einem Gehäuseteil zur Aufnahme von zumindest einem Elektromotor, mit zumindest einem an dem Gehäuseteil angeordneten Inverter, der als Spannungswandler für den Elektromotor vorgesehen ist, mit einem an dem Gehäuseteil angeordneten Wärmeübertrager, der dazu vorgesehen ist, Wärmeenergie von einem ersten Kühlmedium auf ein zweites Kühlmedium zu übertragen, und mit zumindest einem zumindest teilweise in das Gehäuseteil integrierten Kühlmittelsystem.

Es wird weiterhin davon ausgegangen, dass das Hybridantriebsmodul eine erste Seite aufweist, an der der Inverter angeordnet ist, eine zweite Seite, an der der zumindest eine Kühlmittelanschluss angeordnet ist, und eine dritte Seite, an der der Wärmeübertrager angeordnet ist, wobei die erste Seite hinsichtlich eines in einem Kraftfahrzeug montierten Zustandes nach unten gewandt ist und die zwei weiteren Seiten einander gegenüberliegen.

Erfindungsgemäß wird vorgeschlagen, dass das Gehäuseteil zur Anbindung des Wärmeübertragers einen Flansch aufweist, der zumindest eine Kühlmitteldurchführung aufweist, die für eine Einbindung des Wärmeübertragers in das zumindest eine Kühlmittelsystem vorgesehen ist. Dadurch kann eine einfach zu montierende mechanische Verbindung zwischen dem Wärmeübertrager und dem Gehäuseteil bereitgestellt werden, insbesondere eine mechanische Verbindung, die gleichzeitig auch dazu vorgesehen ist, den Wärmeübertrager an den zumindest einen an dem Gehäuseteil angeordneten Kühlmittelanschluss und/oder an das Kühlmittelsystem des Hybridantriebsmoduls anzubinden. Insbesondere kann auf Kühlmittelleitungen verzichtet werden, wodurch eine besonders kompakte und einfache Ausgestaltung erreicht werden kann.

Dadurch können insbesondere der Inverter und der Wärmeübertrager auf besonders platzsparende und herstellgünstige Weise direkt in das Hybridantriebsmodul integriert werden. Dadurch kann ein einheitliches Modul dargestellt werden, welches es ermöglicht, ein Hybridantriebsmodul bereitzustellen, das mit unterschiedlichen Brennkraftmaschinen und/oder Getrieben kombiniert werden kann. Durch die Anordnung an den unterschiedlichen Seiten kann ein vorhandener Bauraum gut genutzt werden. Insgesamt kann ein flexibel einsetzbares, einfach zu montierendes Hybridantriebsmodul bereitgestellt werden. Das Hybridantriebsantriebsmodul weist vorzugsweise genau vier Seiten auf, die zumindest im Wesentlichen senkrecht zu einer Längserstreckungsrichtung orientiert sind. Unter einer "Seite" soll in diesem Zusammenhang insbesondere ein Teilbereich einer Oberfläche des Hybridantriebsmoduls verstanden werden, welcher innerhalb eines von vier Segmenten liegt, in welche das Hybridantriebsmodul zur Beschreibung einer Geometrie entlang der Längserstreckungsrichtung unterteilbar ist. Unter einem "Segment" soll dabei insbesondere ein Segment verstanden werden, welches durch zwei Ebenen beschreibbar ist, die sich in einer Linie parallel zu der Längserstreckungsrichtung schneiden. Unter der Längserstreckungsrichtung ist eine Richtung entlang einer Drehachse eines Rotors des Elektromotors gemeint. Unter einer Längsachse ist die Drehachse des Rotors des Elektromotors gemeint. Zur Definition der vier Seiten sind dabei höchstens vier Ebenen notwendig. Grundsätzlich können die vier Segmente und damit die vier Seiten durch zwei rechtwinklig zueinander orientierte Ebenen definiert werden. Unter einer nach unten gewandten Seite des Hybridantriebsmoduls soll dabei insbesondere der Teilbereich der Oberfläche verstanden werden, der in einem Segment liegt, dessen Öffnungsrichtung zumindest im Wesentlichen nach unten gewandt ist. Unter "zumindest im Wesentlichen" soll dabei insbesondere verstanden werden, dass die Öffnungsrichtung und eine nach unten gewandte Richtung einen Winkel von höchstens 20 Grad einschließen. Unter einer "Öffnungsrichtung" soll eine Richtung verstanden werden, welche durch eine Winkelhalbierende zwischen den zwei Ebenen definiert ist. Unter "vorgesehen" soll insbesondere speziell ausgelegt und/oder ausgestattet verstanden werden.

Die vier Seiten sind vorteilhafter Weise: 1. unten (ein Gehäusewandbereich unterhalb der Längsachse), 2. seitlich rechts (ein Gehäusewandbereich im Wesentlichen rechts von der Längsachse), 3. seitlich links (ein Gehäusewandbereich im Wesentlichen links von der Längsachse, 4. oben (ein Gehäusewandbereich im Wesentlichen oberhalb der Längsachse).

Mit den zwei weiteren sich gegenüberliegenden Seiten sind vorteilhafterweise die seitlich linke und die seitlich rechte Seite gemeint.

Weiter wird vorgeschlagen, dass das Hybridantriebsmodul einen Stromanschluss aufweist, der gemeinsam mit dem Kühlmittelanschluss an der zweiten Seite angeordnet ist. Dadurch kann ein einheitliches Anschlusskonzept auch für die Anbindung an eine Leistungsversorgungseinheit, wie beispielsweise eine Batterie oder eine Brennstoffzelle, einfach realisiert werden. Alternativ kann auch nur der Stromanschluss an der zweiten Seite angeordnet sein. Der Kühlwasseranschluss kann grundsätzlich auch an einer anderen Stelle angeordnet werden.

Weiter wird vorgeschlagen, dass das Hybridantriebsmodul zumindest eine in das zumindest eine Gehäuseteil zumindest teilweise integrierte Stromleitung aufweist, die den Stromanschluss und den Inverter miteinander verbindet. Dadurch kann die Stromleitung gegen Umwelteinflüsse, insbesondere gegen mechanische Beschädigung, gut geschützt werden. Unter "integriert" soll in diesem Zusammenhang insbesondere verstanden werden, dass die Leitung von einem Material, welches das Gehäuseteil ausbildet, umschlossen ist. Unter "zumindest teilweise" soll insbesondere verstanden werden, dass die Stromleitung in wenigstens einem Teilabschnitt von dem Gehäuseteil umschlossen ist.

Unter dem Stromanschluss kann insbesondere ein Hochvoltanschluss verstanden werden, unter der Stromleitung kann insbesondere eine Hochvoltleitung verstanden werden.

Vorzugsweise weist das Gehäuseteil zumindest einen Kühlmittelkanal auf, der den Kühlmittelanschluss und den Wärmeübertrager miteinander verbindet. Das Gehäuseteil weist hierzu vorteilhaft einen integrierten Kühlmittelkanal auf. Dadurch können der Wärmeübertrager und der Kühlmittelanschluss einfach miteinander gekoppelt werden, ohne dass hierfür eine extern geführte Kühlmittelleitung notwendig ist. Unter einem "Kühlmittelanschluss" soll dabei insbesondere ein Konnektor zur Anbindung einer extern geführten Kühlmittelleitung verstanden werden, wie beispielsweise ein Schlauchanschlussstutzen. Unter einem "Kühlmittelkanal" soll insbesondere eine von dem Gehäuseteil umschlossene Aussparung verstanden werden, welche zur Führung eines Kühlmediums vorgesehen ist. Dabei ist es insbesondere denkbar, dass das Gehäuseteil direkt eine Wandung des Kühlmittelkanals ausbildet. Das Gehäuseteil ist vorzugsweise durch ein Gussverfahren hergestellt und der Kühlmittelkanal ist vorzugsweise durch den Gehäuseguss ausgebildet. Alternativ kann das Gehäuseteil auch ein integriertes Rohr zur Führung des Kühlmediums aufweisen, welches eine Wandung des Kühlmittelkanals ausbildet. Dem gegenüber soll unter einer "Kühlmittelleitung" eine von dem Gehäuseteil getrennt ausgebildete Leitung verstanden werden, die zur Führung eines Kühlmediums vorgesehen ist, wie insbesondere ein Kühlmittelschlauch aus flexiblem Material.

Vorzugsweise weist der Inverter zumindest eine Gehäusegrundplatte auf, die dazu vorgesehen ist, einen Inverterinnenraum zur Aufnahme einer Inverterelektronik zu begrenzen, und das Gehäuseteil eine Aussparung aufweist, die von der Gehäusegrundplatte zumindest in montiertem Zustand verschlossen ist. Dadurch kann mit der Aussparung eine Montageöffnung geschaffen werden, die einfach verschlossen werden kann, ohne dass hierfür ein eigenständiger Gehäusedeckel erforderlich ist. Indem die Gehäusegrundplatte des Inverters den Gehäusedeckel ausbildet, kann ein vorhandener Bauraum besonders gut genutzt werden. Unter einer "Gehäusegrundplatte" soll in diesem Zusammenhang insbesondere eine Platte verstanden werden, welche den Inverterinnenraum in Richtung des Innenraums zur Anordnung des Elektromotors begrenzt. Vorzugsweise ist die Gehäusegrundplatte frei von Aussparungen, d.h. auf Durchführungen für die Stromleitung und/oder eine Steuerleitung durch die Gehäusegrundplatte wird verzichtet.

Weiter wird vorgeschlagen, dass der Inverter eine anschlusslose Gehäuseabschlussplatte aufweist, die dazu vorgesehen ist, den Inverterinnenraum in Richtung einer Umgebung zu begrenzen. Indem auf Anschlüsse an der Gehäuseabschlussplatte verzichtet wird, kann auch für die Gehäuseabschlussplatte eine einfache Ausgestaltung erreicht werden. Unter einer "Gehäuseabschlussplatte" soll in diesem Zusammenhang insbesondere eine Platte verstanden werden, welche den Inverterinnenraum auf einer der Gehäusegrundplatte gegenüberliegenden Seite begrenzt. Vorzugsweise spannen die Gehäusegrundplatte und die Gehäuseabschlussplatte den Inverterinnenraum auf. Vorzugsweise sind die Stromleitungen und/oder Steuerleitungen seitlich, d.h. durch eine sich zwischen der Gehäusegrundplatte und der Gehäuseabschlussplatte erstreckende Wandung, in den Inverterinnenraum hineingeführt.

In einer vorteilhaften Weiterbildung wird vorgeschlagen, dass das zumindest eine Gehäuseteil zumindest zwei Schraubaufnahmen zur Anbindung an ein Brennkraftmaschinengehäuse aufweist, die bezogen auf eine Längserstreckungsrichtung schief angeordnet sind. Dadurch kann eine sichere Verbindung bei gleichzeitig guter Montierbarkeit erreicht werden. Unter "bezogen auf eine Längserstreckungsrichtung schief" soll in diesem Zusammenhang insbesondere verstanden werden, dass die Schraubaufnahmen einen Erstreckungsrichtung aufweisen, die mit der Längserstreckungsrichtung in zumindest einer Projektionsebene einen Winkel kleiner als 85 Grad und größer als 5 Grad einschließen.

Bevorzugt ist die erste Seite nach unten gewandt und die zwei weiteren Seiten liegen einander gegenüber. Dadurch kann eine besonders vorteilhafte Anordnung für den Inverter, den Wärmeübertrager und den Kühlmittelanschluss realisiert werden.

Außerdem wird ein Kraftfahrzeug mit einer Brennkraftmaschine, zumindest einem Elektromotor und einem erfindungsgemäßen Hybridantriebsmodul vorgeschlagen.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugantriebsstrangs,
- Fig. 2: eine Aufsicht auf ein Hybridantriebsmodul des Kraftfahrzeugantriebsstrangs,
- Fig. 3: das Hybridantriebsmodul von oben,
- Fig. 4: das Hybridantriebsmodul von einer zweiten Seite,
- Fig. 5: das Hybridantriebsmodul von einer dritten Seite,
- Fig. 6: einen Querschnitt durch das Hybridantriebsmodul,
- Fig. 7: einen Längsschnitt durch das Hybridantriebsmodul und
- Fig. 8: das Hybridantriebsmodul in einer Ansicht von unten.

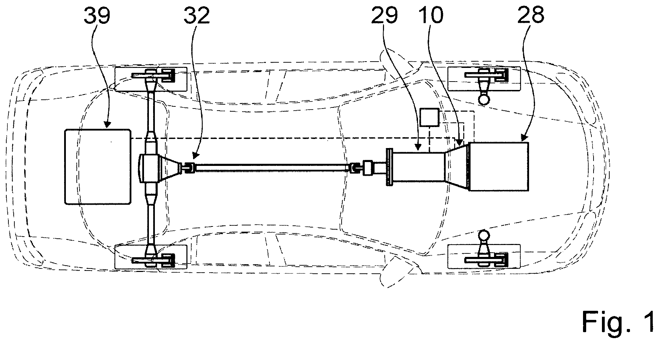

Figur 1 zeigt ein Kraftfahrzeug mit einem Kraftfahrzeugantriebsstrang. Der Kraftfahrzeugantriebsstrang ist als ein Hybridantriebsstrang ausgebildet. Zur Bereitstellung einer mechanischen Leistung, die je nach Ansteuerung als Antriebsleistung oder Bremsleistung ausgebildet sein kann, umfasst der Hybridantriebsstrang eine Brennkraftmaschine 28 und einen Elektromotor 12. Insbesondere zur Übertragung der Leistung der Brennkraftmaschine 28 umfasst der Kraftfahrzeugantriebsstrang ein Getriebe 29, das zur Schaltung unterschiedlich übersetzter Getriebegänge vorgesehen ist. Der Antriebsstrang kann weiter eine zwischen der Brennkraftmaschine 28 und dem Getriebe 29 angeordnete Lastschaltkupplung aufweisen. Die Lastschaltkupplung kann unterschiedlich ausgebildet sein, beispielsweise als Einfachkupplung oder als Doppelkupplung. Alternativ oder zusätzlich kann der Antriebsstrang eine Trennkupplung 30 aufweisen, insbesondere wenn der Elektromotor 12 in einem Leistungsfluss zwischen der Brennkraftmaschine 28 und dem Getriebe 29 angeordnet ist. Alternativ zu der Lastschaltkupplung ist es auch denkbar, dass der Antriebsstrang einen Drehmomentwandler 31 zur Anbindung des Getriebes 29 an die Brennkraftmaschine 28 aufweist. Für das Getriebe 29 sind unterschiedliche Ausgestaltungen denkbar.

Der Kraftfahrzeugantriebsstrang umfasst weiter zumindest einen Achsantrieb 32, der dazu vorgesehen ist, die von der Brennkraftmaschine 28 und/oder dem Elektromotor 12 bereitgestellte Leistung auf Antriebsräder zu übertragen. Das Getriebe 29 ist, bezogen auf eine von der Brennkraftmaschine 28 bereitgestellte Leistung, im Kraftfluss zwischen der Brennkraftmaschine 28 und dem Achsantrieb 32 angeordnet. Das Getriebe 29 umfasst zumindest eine nicht näher dargestellte Getriebeeingangswelle, die zur Einleitung der von der Brennkraftmaschine 28 bereitgestellten Leistung in das Getriebe 29 vorgesehen ist. Ist das Getriebe 29 als ein Doppelkupplungsgetriebe ausgebildet, umfasst es zwei im Kraftfluss parallel angeordnete Getriebeeingangswellen sowie zwei Teilgetriebe, die jeweils zur Schaltung von einem Teil der Getriebegänge vorgesehen sind.

Die Brennkraftmaschine 28 umfasst eine nicht näher dargestellte Kurbelwelle, die zur drehfesten Verbindung mit der Getriebeeingangswelle vorgesehen ist. Die Lastschaltkupplung oder der Drehmomentwandler 31 ist dazu vorgesehen, die Getriebeeingangswelle und die Kurbelwelle drehfest miteinander zu verbinden. Der Elektromotor 12 umfasst einen Rotor 33, der wahlweise drehfest mit der Getriebeeingangswelle oder der Kurbelwelle verbunden sein kann. Umfasst der Kraftfahrzeugantriebsstrang zusätzlich die Trennkupplung 30, so kann der Kraftfahrzeugantriebsstrang eine Zwischenwelle aufweisen, wobei in einer solchen Ausgestaltung vorzugsweise die Trennkupplung 30 dazu vorgesehen ist, die Kurbelwelle und die Zwischenwelle drehfest miteinander zu verbinden, und die Lastschaltkupplung oder der Drehmomentwandler 31 dazu vorgesehen ist, die Zwischenwelle und die Getriebeeingangswelle drehfest miteinander zu verbinden. Der Rotor 33 des Elektromotors 12 ist in einer solchen Ausgestaltung vorzugsweise drehfest mit der Zwischenwelle verbunden.

Zur Anordnung des Elektromotors 12 umfasst der Kraftfahrzeugantriebsstrang ein Hybridantriebsmodul 10, das zwischen der Brennkraftmaschine 28 und dem Getriebe 29 angeordnet ist. Das Hybridantriebsmodul 10 ist dazu vorgesehen, mit unterschiedlichen Brennkraftmaschinen 28 und/oder unterschiedlichen Getrieben 29 kombiniert zu werden. Das Hybridantriebsmodul 10 ist räumlich und in Bezug auf einen Leistungsfluss zwischen der Brennkraftmaschine 28 und dem Getriebe 29 angeordnet.

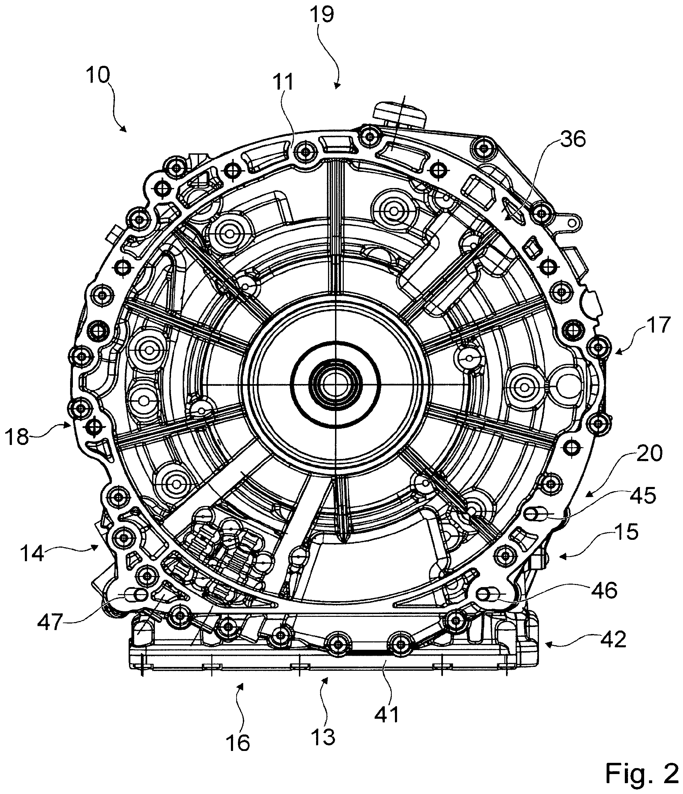

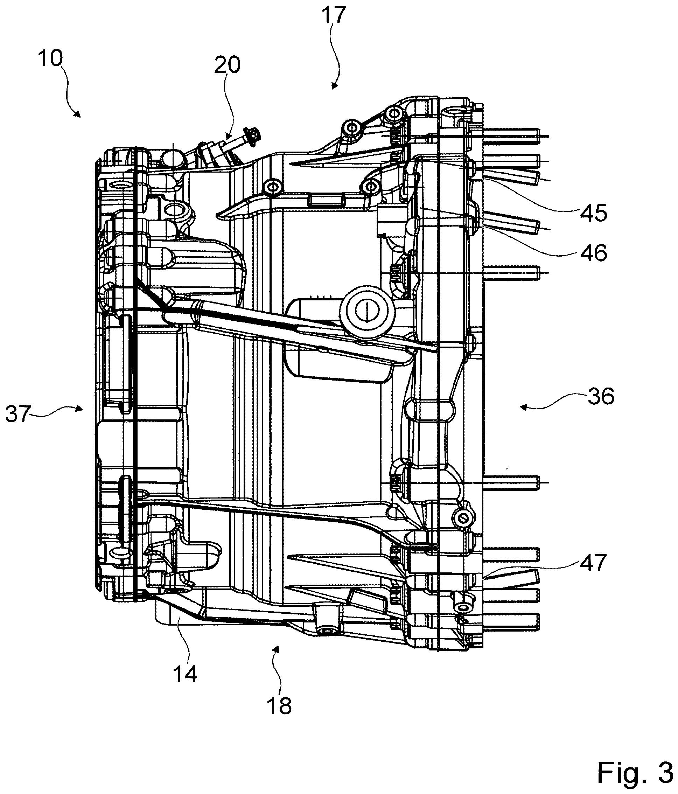

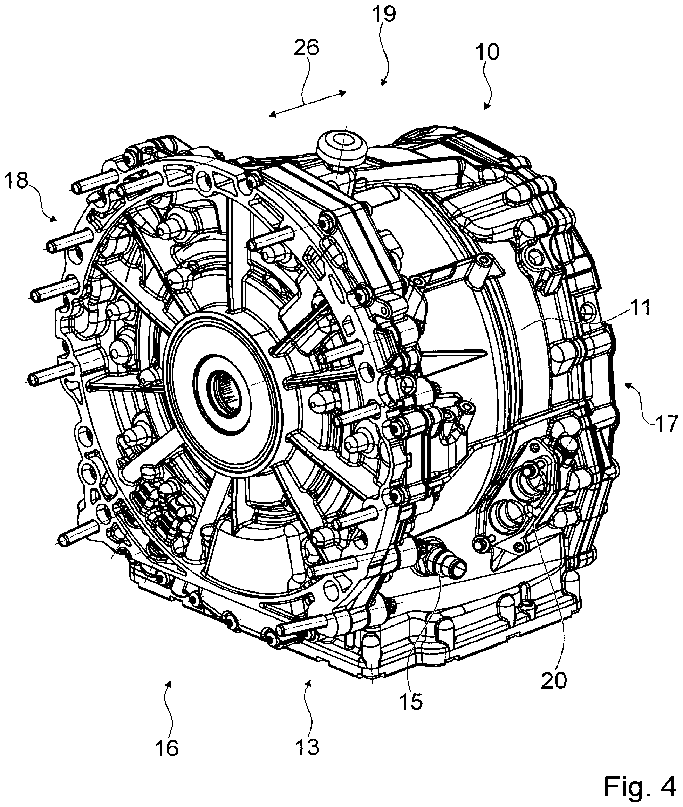

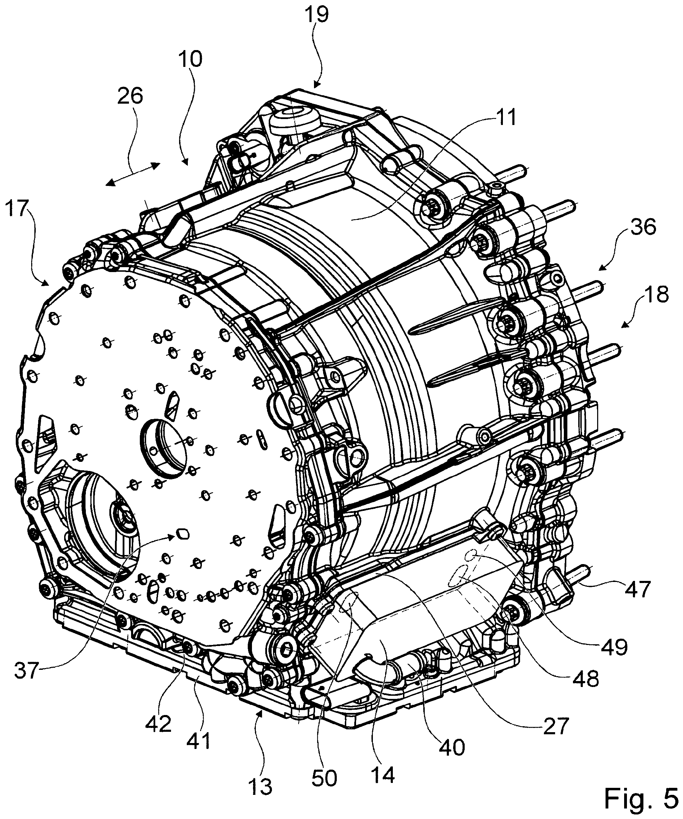

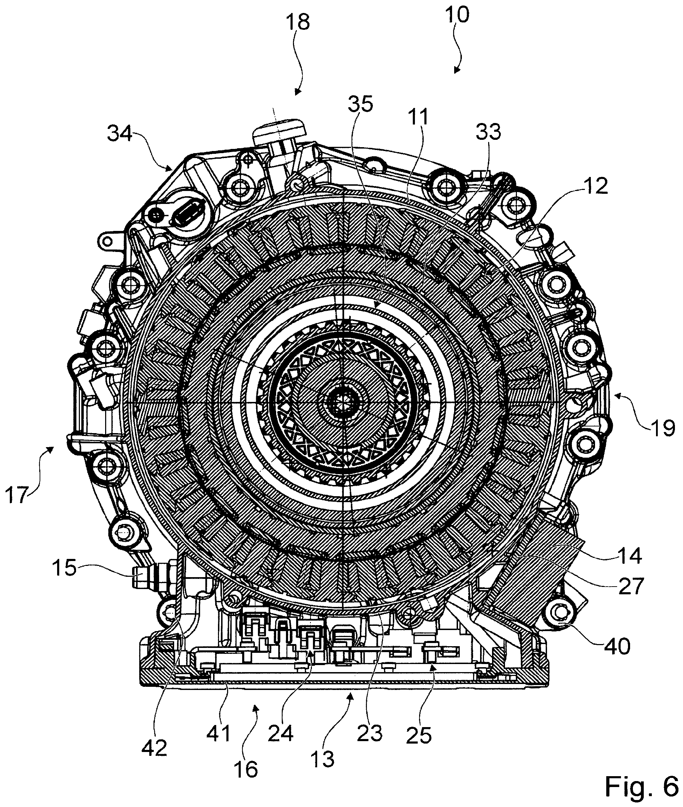

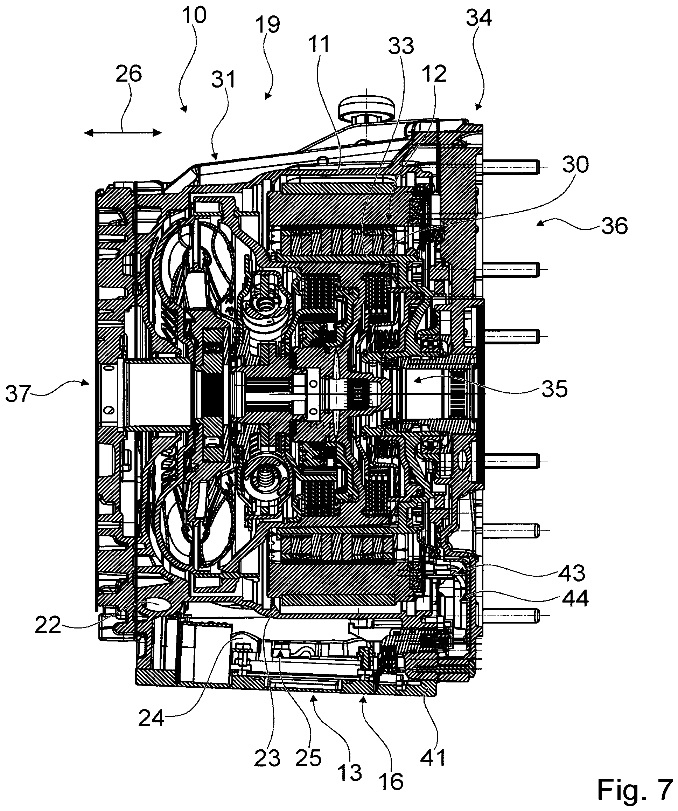

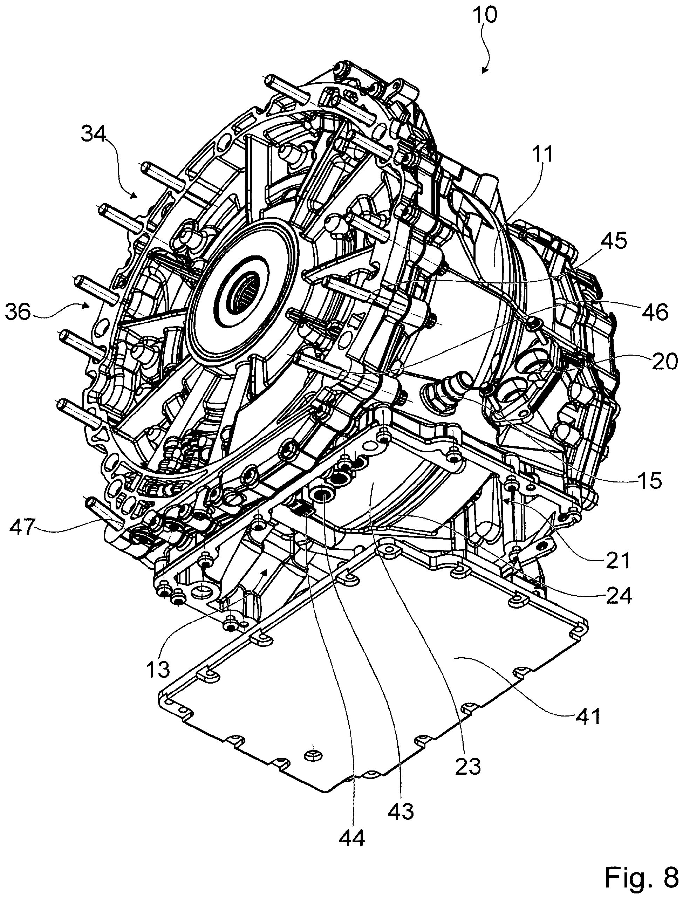

Das Hybridantriebsmodul 10 (vgl. Figuren 2 bis 8) umfasst ein Gehäuse 34 mit zumindest einem Gehäuseteil 11. Das Gehäuse 34 spannt einen Innenraum 35 auf, in dem zumindest der Elektromotor 12 angeordnet ist. Das Gehäuseteil 11 ist zur Aufnahme des Elektromotors 12 vorgesehen. Das Gehäuseteil 11 kann weiter zur Aufnahme des Drehmomentwandlers 31 und/oder der Trennkupplung 30 vorgesehen sein. Zur Verbindung mit der Brennkraftmaschine 28 weist das Gehäuse 34 einen Flansch 36 auf, welcher für eine feste Verbindung mit einem Brennkraftmaschinengehäuse vorgesehen ist. Zur Verbindung mit dem Getriebe 29 weist das Gehäuse 34 einen Flansch 37 auf, welcher für eine feste Verbindung mit einem Getriebegehäuse vorgesehen ist. Die Flansche 36, 37 weisen jeweils eine planare Anbindungsfläche auf, die zur Verbindung mit der Brennkraftmaschine 28 und dem Getriebe 29 vorgesehen sind. Die Anbindungsflächen sind parallel zueinander angeordnet.

Der Innenraum 35, in dem der Elektromotor 12 angeordnet ist, wird im Wesentlichen von dem Gehäuseteil 11 aufgespannt. Der Elektromotor 12 weist eine Rotationsachse auf, die koaxial zu einer Mittelachse des Innenraums 35 verläuft. Das Gehäuse 34 weist eine Längserstreckungsrichtung 26 auf, die parallel zu der Mittenachse verläuft. Das Gehäuse 34 weist vier Seiten 16, 17, 18, 19 auf, die den Innenraum 35 entlang der Längserstreckungsrichtung 26 umschließen. Das Gehäuseteil 11 umschließt den Innenraum 35 an zumindest drei der vier Seiten 16, 17, 18, 19. Die vier Seiten 16, 17, 18, 19 sind in vier unterschiedliche Richtungen orientiert.

Das Gehäuse 34 und der Innenraum 35 weisen bezogen auf die Mittenachse eine im Wesentlichen zylinderförmige Grundform auf. Die Flansche 36, 37 zur Verbindung mit der Brennkraftmaschine 28 und zur Verbindung mit dem Getriebe 29 weisen, bezogen auf die Mittenachse, eine im Wesentlichen runde Grundform auf. Über die im Wesentlichen runde Grundform sind die vier Seiten 16, 17, 18, 19 des Gehäuses 34 definiert. Zu Definition der Seiten 16, 17, 18, 19 wird das Gehäuse 34 entlang der Längserstreckungsrichtung 26 in vier Segmente unterteilt, die bezogen auf die Mittenachse jeweils in Form eines Zylindersegments ausgebildet sind. Die Segmente sind durch vier Ebenen beschreibbar, welche sich in der Mittenachse schneiden. Jedes der Segmente ist durch zwei der Ebenen begrenzt. Die Ebenen sind jeweils in einem Winkel von zumindest 70 Grad zueinander angeordnet. Die Segmente weisen eine Öffnungsrichtung auf, welche durch eine winkelhalbierende Ebene zwischen den Ebenen definiert ist. Die Richtungen, in welche die Seiten 16, 17, 18, 19 orientiert sind, entsprechen den Öffnungsrichtungen.

Weiter umfasst das Hybridantriebsmodul 10 einen an dem Gehäuseteil 11 angeordneten Inverter 13, der eine Inverterelektronik 25 aufweist, die für eine Spannungswandlung zwischen einer Gleichspannung und einer Wechselspannung vorgesehen ist. Je nach Ansteuerung wird dem Elektromotor 12 elektrische Leistung in Form von Wechselspannung zugeführt oder von dem Elektromotor 12 wird elektrische Leistung in Form von Wechselspannung bereitgestellt. Der Inverter 13 ist zu einer Einstellung und/oder Regelung dieser Leistung vorgesehen. Die elektrische Leistung wird in Form von Gleichspannung an eine Leistungsversorgungseinheit 39 übertragen oder von dieser bereitgestellt. Die Leistungsversorgungseinheit 39 ist zumindest dazu vorgesehen, elektrische Leistung in Form von Gleichspannung bereitzustellen. Vorzugsweise ist die Leistungsversorgungseinheit 39 zusätzlich zur Speicherung von elektrischer Energie vorgesehen. Die Leistungsversorgungseinheit 39 kann grundsätzlich unterschiedliche Ausgestaltungen aufweisen und kann beispielsweise einen Akkumulator, eine Brennstoffzelle und/oder einen Range-Extender aufweisen. Der Inverter 13 ist, bezogen auf eine zwischen dem Elektromotor 12 und der Leistungsversorgungseinheit 39 ausgetauschte Leistung, zwischen dem Elektromotor 12 und der Leistungsversorgungseinheit 39 angeordnet.

Weiter umfasst das Hybridantriebsmodul 10 einen an dem Gehäuseteil 11 angeordneten Wärmeübertrager 14, der dazu vorgesehen ist, Wärmeenergie von einem ersten Kühlmedium auf ein zweites Kühlmedium zu übertragen. Das Hybridantriebsmodul 10 umfasst ein in das Gehäuseteil 11 integriertes erstes Kühlmittelsystem, das insbesondere zur Temperierung des Elektromotors 12 vorgesehen ist. Zudem umfasst das Hybridantriebsmodul 10 ein teilweise in das Hybridantriebsmodul 10 integriertes zweites Kühlmittelsystem, das mittels des Wärmeübertragers 14 mit dem ersten Kühlmittelsystem gekoppelt ist. Die beiden Kühlmittelsysteme sind zum Betrieb mit unterschiedlichen Kühlmedien vorgesehen. Das erste Kühlmittelsystem ist insbesondere für einen Betrieb mit Öl als Kühlmedium vorgesehen. Das zweite Kühlmittelsystem ist insbesondere für einen Betrieb mit Wasser als Kühlmedium vorgesehen.

Das erste Kühlmittelsystem bildet einen geschlossenen Kreislauf für das Hybridantriebsmodul 10 aus. Der Innenraum 35, der von dem Gehäuse 34 aufgespannt wird, ist als ein Nassraum ausgebildet. Das erste Kühlmittelsystem weist eine Betriebsmittelpumpe auf, die dazu vorgesehen ist, das Kühlmedium von dem Innenraum 35 zu dem Wärmeübertrager 14 und wieder in den Innenraum 35 zurück zu fördern. Das zweite Kühlmittelsystem weist zwei Kühlmittelanschlüsse 15, 40 zur Anbindung von Kühlmittelleitungen auf. Mittels der Kühlmittelanschlüsse 15, 40 ist das zweite Kühlmittelsystem zur Anbindung an ein nicht näher dargestelltes Kühlmittelsystem des Kraftfahrzeugantriebsstrangs vorgesehen, an welches beispielsweise auch die Brennkraftmaschine 28, das Getriebe 29 und/oder die Leistungsversorgungseinheit 39 angebunden sein können.

Der Inverter 13, einer der Kühlmittelanschlüsse 15, 40 und der Wärmeübertrager 14 sind an den unterschiedlichen Seiten 16, 17, 18, 19 des Hybridantriebsmoduls 10 angeordnet. Der Inverter 13 ist an der ersten Seite 16 angeordnet. Der Kühlmittelanschluss 15 ist an der zweiten Seite 17 angeordnet. Der Wärmeübertrager 14 ist an der dritten Seite 18 angeordnet.

Das Gehäuse 34 weist eine nach außen gewandte Oberfläche auf, die in unterschiedlichen Richtungen gerichtete Oberflächennormalen aufweist. Die Seiten 16, 17, 18, 19 des Gehäuses 34 sind jeweils durch Teilbereiche der Oberfläche ausgebildet. Die Seiten 16, 17, 18, 19 sind dabei durch die nicht-überlappenden Teilbereiche der nach außen gewandten Oberfläche ausgebildet, in denen die Oberflächennormalen im Mittel zumindest im Wesentlichen in eine gleiche Richtung weisen. Die nach unten gewandte Seite 16 kann beispielsweise definiert sein durch einen Teilbereich der Oberfläche, in dem die Oberflächennormalen mit einer Richtung, die nach unten zeigt, einen Winkel von höchstens 30 Grad aufweisen. Auch ist es denkbar, eine Form der Oberfläche durch einen Quader oder einen Zylinderstumpf anzunähern, dessen Seiten den Seiten 16, 17, 18, 19 des Gehäuses 34 entsprechen oder dessen Geometrie zumindest zur Definition der Seiten 16, 17, 18, 19 herangezogen werden kann.

Weiter umfasst das Hybridantriebsmodul 10 einen Stromanschluss in Form eines Hochvolt-Anschlusses 20, der zur Anbindung des Inverters 13 an die Leistungsversorgungseinheit 39 vorgesehen ist. Der Hochvolt-Anschluss 20 ist gemeinsam mit dem Kühlmittelanschluss 15 an der zweiten Seite 17 angeordnet. Der Inverter 13 ist an der ersten Seite 16 angeordnet. Der Hochvolt-Anschluss 20 umfasst wenigstens zwei Kontakte, die zur Ausbildung eines geschlossenen Stromkreises zwischen dem Inverter 13 und der Leistungsversorgungseinheit 39 vorgesehen sind. Eine elektrische Leistung, die der Elektromotor 12 bereitstellt oder die dem Elektromotor 12 zugeführt wird, wird vollständig über den Hochvolt-Anschluss 20 übertragen. Bezogen auf eine dem Elektromotor 12 zugeführte elektrische Leistung ist der Inverter 13 zwischen dem Hochvolt-Anschluss 20 und dem Inverter 13 angeordnet. Das Hybridantriebsmodul 10 weist lediglich den einen Hochvolt-Anschluss 20 auf, der an der zweiten Seite 17 angeordnet ist.

Weiter umfasst das Hybridantriebsmodul 10 eine in das zumindest eine Gehäuseteil 11 zumindest teilweise integrierte Stromleitung in Form einer Hochvolt-Leitung 21, die den Hochvolt-Anschluss 20 und den Inverter 13 miteinander verbindet. Die Hochvolt-Leitung 21 kann beispielweise durch den Innenraum 35 hindurchgeführt sein. Auch ist es denkbar, dass das Gehäuseteil 11 einen Hohlraum aufweist, in dem die Hochvolt-Leitung 21 geführt ist.

Ferner weist das Hybridantriebsmodul 10 zumindest einen in das Gehäuseteil 11 integrierten Kühlmittelkanal 22 auf, der den Kühlmittelanschluss 15 und den Wärmeübertrager 14 miteinander verbindet. Der Kühlmittelkanal 22 ist durch einen Hohlraum in dem Gehäuseteil 11 ausgebildet, der von dem Innenraum 35 vollständig getrennt ist. Der Kühlmittelkanal 22 ist für das zweite Kühlsystem vorgesehen. Der Kühlmittelkanal 22 ist als Kühlwasserkanal ausgebildet. Er ist lediglich für eine Führung des Kühlmediums in eine Richtung vorgesehen. Der Kühlmittelanschluss 15 ist zur Anbindung von genau einer Kühlmittelleitung vorgesehen. Der Kühlmittelanschluss 15 ist als ein Kühlwassereingang ausgebildet. In einem Betrieb strömt das Kühlmedium, das über die Kühlmittelleitung zugeführt wird, durch den Kühlmittelanschluss 15 in das Hybridantriebsmodul 10 ein und wird über den Kühlmittelkanal 22 dem Wärmeübertrager 14 zugeführt. Der Kühlmittelkanal 22 ist vorzugsweise als eine Bohrung in dem Gehäuseteil 11 ausgebildet. Alternativ ist es auch denkbar, dass das Gehäuseteil 11 ein Rohr aufweist, welches vorzugsweise bereits bei einer Herstellung in einem Gussverfahren eingesetzt wird.

Der Inverter 13 weist eine Gehäusegrundplatte 23 auf, die dazu vorgesehen ist, einen Inverterinnenraum 24 zur Aufnahme der Inverterelektronik 25 zu begrenzen. Das Gehäuseteil 11 weist eine Aussparung auf, die von der Gehäusegrundplatte 23 zumindest in montiertem Zustand verschlossen ist. Die Gehäusegrundplatte 23 des Inverters 13 bildet damit ein Teil des Gehäuses 34 für den Elektromotor 12 aus. Der Innenraum 35, in dem der Elektromotor 12 angeordnet ist, wird zumindest in radialer Richtung von dem Gehäuseteil 11 und der Gehäusegrundplatte 23 begrenzt. Das Gehäuse 34 weist vorzugsweise eine Dichtung auf, welche zwischen dem Gehäuseteil 11 und der Gehäusegrundplatte 23 angeordnet ist. Die Dichtung ist dazu vorgesehen, den für den Elektromotor 12 vorgesehenen Innenraum 35 in Richtung einer Umgebung abzudichten. Die Gehäusegrundplatte 23 des Inverters 13 fungiert als Hybridantriebsmoduldeckel. Die Aussparung ist in Form eines ebenen Flansches ausgebildet. Sie weist eine rechteckförmige Grundform auf. Die Gehäusegrundplatte 23 weist eine dem Innenraum 35 zugewandte Oberseite auf, die gekrümmt ausgeführt ist. Der für den Elektromotor 12 vorgesehene Innenraum 35 ist, insbesondere im Bereich des Inverters 13, zylinderförmig ausgebildet. Der Inverterinnenraum 24 ist in Form eines Quaders ausgebildet, dem ein Zylinderauschnitt entsprechend dem Innenraum 35 fehlt.

Der Inverter 13 weist weiter eine anschlusslose Gehäuseabschlussplatte 41 auf, die dazu vorgesehen ist, den Inverterinnenraum 24 in Richtung einer Umgebung zu begrenzen. Die Gehäusegrundplatte 23 und die Gehäuseabschlussplatte 41 begrenzen in montiertem Zustand den Inverterinnenraum 24. In montiertem Zustand ist der Inverterinnenraum 24 in Richtung einer Umgebung abgedichtet. Der Inverterinnnenraum 24 wird von der Gehäusegrundplatte 23 und der Gehäuseabschlussplatte 41 aufgespannt. Die Gehäusegrundplatte 23 und/oder die Gehäuseabschlussplatte 41 weisen Wandungselemente 42 auf, welche sich zwischen der Gehäusegrundplatte 23 und der Gehäuseabschlussplatte 41 erstrecken und den Inverterinnenraum 24 seitlich abschließen.

Das Hybridantriebsmodul 10 weist eine weitere Stromleitung in Form einer Hochvolt-Leitung 43 auf, welche den Inverter 13 und den Elektromotor 12 verbindet, sowie eine Steuerleitung 44 zur Anbindung des Elektromotors 12 an den Inverter 13. Die Wandungselemente 42 und/oder die Gehäuseabschlussplatte 41 weisen zumindest eine Aussparung auf, die zur Durchführung der Hochvolt-Leitungen 21, 43 für den Elektromotor 12 und den Hochvolt-Anschluss 20 sowie der Steuerleitung 44 vorgesehen ist. Die Hochvolt-Leitungen 21, 43 und die Steuerleitung 44 sind seitlich aus dem Inverterinnenraum 24 hinausgeführt. Das Gehäuseteil 11 weist eine erste Aussparung auf, durch die die Hochvolt-Leitung 43 in den Innenraum 35, in dem der Elektromotor 12 angeordnet ist, hineingeführt ist, und eine zweite Aussparung, durch die die Steuerleitung 44 in den Innenraum 35 hineingeführt ist. Die Aussparungen sind im Bereich eines Übergangs zwischen der ersten Seite 16 und der zweiten Seite 17 angeordnet. Die Gehäuseabschlussplatte 41 weist einen Bereich auf, welcher die Hochvolt-Leitungen 21, 43 und die Steuerleitung 44 in montiertem Zustand verdeckt.

Das Gehäuseteil 11 weist Schraubaufnahmen 45, 46, 47 auf, die zur Anbindung an das Brennkraftmaschinengehäuse der Brennkraftmaschine 28 vorgesehen sind. Die Schraubaufnahmen 45, 46, 47 sind an der Seite 16 angeordnet, an der der Inverter 13 angeordnet ist. Die Schraubaufnahmen 45, 46, 47 sind bezogen auf die Längserstreckungsrichtung 26 schief angeordnet. Die Schraubaufnahmen 45, 46, 47 weisen Erstreckungsrichtungen auf, welche mit der Längserstreckungsrichtung 26 einen spitzen Winkel einschließen. Die Schraubaufnahmen 45, 46, 47 sind zudem teilweise schief zueinander angeordnet. Die Schraubaufnahmen 45, 46, 47 liegen in einer Ebene, die parallel zu einer Ebene verläuft, welche durch die Aussparung in dem Gehäuseteil 11 aufgespannt ist. Die Ebene, in der die Schraubaufnahmen 45, 46, 47 liegen, und die durch die Aussparung aufgespannte Ebene liegen, bezogen auf Abmessungen des Gehäuses 34, unmittelbar nebeneinander oder sind identisch. Die Schraubaufnahmen 45, 46, 47 sind nach innen gerichtet, d.h. die Erstreckungsrichtungen der schief zueinander angeordneten Schraubaufnahmen 45, 46, 47 weisen einen virtuellen Schnittpunkt auf, der, zumindest wenn das Hybridantriebsmodul 10 mit der Brennkraftmaschine 28 verbunden ist, innerhalb der Brennkraftmaschine 28 liegt. Das Gehäuseteil 11 weist im Bereich der Seite 16, an der der Inverter 13 angeordnet ist, die drei Schraubaufnahmen 45, 46, 47 auf. Zwei der Schraubaufnahmen 45, 46, 47 sind in einem Bereich des Gehäuseteils 11 angeordnet, in dem die erste Seite 16 in die zweite Seite 17 übergeht. Eine der Schraubaufnahmen 45, 46, 47 ist in einem Bereich des Gehäuseteils 11 angeordnet, in dem die erste Seite 16 in die dritte Seite 18 übergeht.

Das Gehäuseteil 11 weist an der dritten Seite 18 einen Flansch 27 zur Anbindung des Wärmeübertragers 14 auf. Der Flansch 27 weist drei Kühlmitteldurchführungen 48, 49, 50 auf. Die zwei Kühlmitteldurchführung 48, 49 sind für eine Einbindung des Wärmeübertragers 14 in das erste Kühlmittelsystem vorgesehen. Die Kühlmitteldurchführung 50 ist für eine Einbindung des Wärmeübertragers 14 in das zweite Kühlmittelsystem vorgesehen. Die Kühlmitteldurchführungen 48, 49, 50 sind direkt in den Flansch 27 integriert. Der Flansch 27 weist eine ebene Anbindungsfläche zur Anbindung des Wärmeübertragers 14 auf, in welche die Kühlmitteldurchführungen 48, 49, 50 integriert sind. Der Wärmeübertrager 14 weist eine korrespondierend ausgebildete Anbindungsfläche auf, in welche ebenfalls drei Kühlmitteldurchführungen integriert sind. Wird der Wärmeübertrager 14 an dem Flansch 27 befestigt, werden gleichzeitig die Kühlmitteldurchführungen 48, 49, 50 miteinander verbunden. Zur Befestigung des Wärmeübertragers 14 an dem Flansch 27 des Gehäuseteils 11 sind grundsätzlich unterschiedliche Befestigungsarten möglich, wie insbesondere eine Schraubverbindung.

Der Kühlmittelanschluss 15 und die Kühlmitteldurchführung 50 sind durch den Kühlmittelkanal 22, der in das Gehäuseteil 11 integriert ist, miteinander verbunden. Der Kühlmittelkanal 22 führt an dem Inverter 13 entlang. Der Inverter 13 ist über den Kühlmittelanschluss 15, den Kühlmittelkanal 22 und die Kühlmitteldurchführung 50 an das zweite Kühlmittelsystem angebunden. Die Kühlmitteldurchführung 50 in dem Wärmeübertrager 14, die für das zweite Kühlmittelsystem vorgesehen ist, ist als ein Kühlwassereingang ausgebildet. Das Kühlmedium strömt über den Kühlmittelanschluss 15 an der zweiten Seite 17 des Gehäuseteils 11 in das Hybridantriebsmodul 10 ein, strömt durch den Kühlmittelkanal 22 in dem Gehäuseteil 11 und tritt in den Wärmeübertrager 14 über. Der Wärmeübertrager 14 weist den einen Kühlmittelanschluss 40 auf, der zur Anbindung einer Kühlmittelleitung vorgesehen ist. Der Kühlmittelanschluss 40 des Wärmeübertragers 14 ist als Kühlmittelausgang ausgebildet. Der Wärmeübertrager 14 kann beispielsweise als ein Plattenwärmetauscher ausgebildet sein, insbesondere als ein gelöteter Plattenwärmetauscher. Alternativ sind auch andere Ausgestaltungen denkbar.

Die erste Seite 16 ist nach unten gewandt. Die Gehäusegrundplatte 23 des Inverters 13 bildet einen Boden des Hybridantriebsmoduls 10 aus. An der nach unten gewandten Seite 16 ist das Gehäuse 34 abgeflacht. Die zweite Seite 17 und die dritte Seite 18 liegen einander gegenüber. Von der Brennkraftmaschine 28 ausgehend betrachtet ist die zweite Seite 17 nach rechts gewandt. Die dritte Seite 18 ist nach links gewandt. Der Kraftfahrzeugantriebsstrang ist für einen Front-Längs-Einbau der Brennkraftmaschine 28 vorgesehen. Entlang einer Fahrtrichtung gesehen ist die zweite Seite 17 nach links gewandt und die dritte Seite 18 ist nach rechts gewandt. Das Hybridantriebsmodul 10 ist zur Kombination mit einem nachgeschalteten Allradantriebsmodul vorgesehen. Die Grundform des Gehäuses 34 ist beidseitig für eine Vorbeiführung einer Antriebswelle vorgesehen.

### Bezugszeichenliste

- 10: Hybridantriebsmodul
- 11: Gehäuseteil
- 12: Elektromotor
- 13: Inverter
- 14: Wärmeübertrager
- 15: Kühlmittelanschluss
- 16: Seite
- 17: Seite
- 18: Seite
- 19: Seite
- 20: Hochvolt-Anschluss
- 21: Hochvolt-Leitung
- 22: Kühlmittelkanal
- 23: Gehäusegrundplatte
- 24: Inverterinnenraum
- 25: Inverterelektronik
- 26: Längserstreckungsrichtung
- 27: Flansch
- 28: Brennkraftmaschine
- 29: Getriebe
- 30: Trennkupplung
- 31: Drehmomentwandler
- 32: Achsantrieb
- 33: Rotor
- 34: Gehäuse
- 35: Innenraum
- 36: Flansch
- 37: Flansch
- 39: Leistungsversorgungseinheit
- 40: Kühlmittelanschluss
- 41: Gehäuseabschlussplatte
- 42: Wandungselemente
- 43: Hochvolt-Leitung
- 44: Steuerleitung
- 45: Schraubaufnahmen
- 46: Schraubaufnahmen
- 47: Schraubaufnahmen
- 48: Kühlmitteldurchführung
- 49: Kühlmitteldurchführung
- 50: Kühlmitteldurchführung

## Patentansprüche

1. Hybridantriebsmodul (10) für einen Kraftfahrzeugantriebsstrang, mit zumindest einem Gehäuseteil (11) zur Aufnahme von zumindest einem Elektromotor (12), mit zumindest einem an dem Gehäuseteil (11) angeordneten Inverter (13), der als Spannungswandler für den Elektromotor (12) vorgesehen ist, mit einem an dem Gehäuseteil (11) angeordneten Wärmeübertrager (14), der dazu vorgesehen ist, Wärmeenergie von einem ersten Kühlmedium auf ein zweites Kühlmedium zu übertragen, und mit zumindest einem zumindest teilweise in das Gehäuseteil (11) integrierten Kühlmittelsystem, das zumindest einen Kühlmittelanschluss (15) zur Anbindung einer Kühlmittelleitung aufweist,
und mit
einer ersten Seite (16), an der der Inverter (13) angeordnet ist, einer zweiten Seite (17), an der der zumindest eine Kühlmittelanschluss (15) angeordnet ist, und einer dritten Seite (18), an der der Wärmeübertrager (14) angeordnet ist,
wobei die erste Seite (16), die zweite Seite (17), die dritte Seite (18) und eine vierte Seite im Wesentlichen senkrecht zu einer Drehachse eines Rotors (33) des Elektromotors (12) orientiert sind,
wobei die erste Seite (16) hinsichtlich eines in einem Kraftfahrzeug montierten Zustandes nach unten gewandt ist und wobei die zweite Seite (17) und die dritte Seite (18) einander gegenüberliegen
**dadurch gekennzeichnet, dass**
das Gehäuseteil (11) einen Flansch (27) zur Anbindung des Wärmeübertragers (14) aufweist, der zumindest eine Kühlmitteldurchführung (50) aufweist, die für eine Einbindung des Wärmeübertragers (14) in das zumindest eine Kühlmittelsystem vorgesehen ist.

2. Hybridantriebsmodul (10) nach Anspruch 1,
**gekennzeichnet durch**
einen Stromanschluss (20), der gemeinsam mit dem Kühlmittelanschluss (15) an der zweiten Seite (17) angeordnet ist.

3. Hybridantriebsmodul (10) nach Anspruch 2,
**gekennzeichnet durch**
zumindest eine in das zumindest eine Gehäuseteil (11) zumindest teilweise integrierte Stromleitung (21), die den Stromanschluss (20) und den Inverter (13) miteinander verbindet.

4. Hybridantriebsmodul (10) nach einem der vorhergehenden Ansprüche,
**dadurch gekennzeichnet, dass**
das Gehäuseteil (11) zumindest einen Kühlmittelkanal (22) aufweist, der den Kühlmittelanschluss (15) und den Wärmeübertrager (14) miteinander verbindet.

5. Hybridantriebsmodul (10) nach einem der vorhergehenden Ansprüche,
**dadurch gekennzeichnet, dass**
der Inverter (13) zumindest eine Gehäusegrundplatte (23) aufweist, die dazu vorgesehen ist, einen Inverterinnenraum (24) zur Aufnahme einer Inverterelektronik (25) zu begrenzen, und das Gehäuseteil (11) eine Aussparung aufweist, die von der Gehäusegrundplatte (23) zumindest in montiertem Zustand verschlossen ist.

6. Hybridantriebsmodul (10) nach Anspruch 5,
**dadurch gekennzeichnet, dass**
der Inverter (13) eine anschlusslose Gehäuseabschlussplatte (41) aufweist, die dazu vorgesehen ist, den Inverterinnenraum (24) in Richtung einer Umgebung zu begrenzen.

7. Hybridantriebsmodul (10) nach einem der vorhergehenden Ansprüche,
**dadurch gekennzeichnet, dass**
das zumindest eine Gehäuseteil (11) zumindest zwei Schraubaufnahmen (45, 46, 47) zur Anbindung an ein Brennkraftmaschinengehäuse aufweist, die bezogen auf eine Längserstreckungsrichtung (26) schief angeordnet sind.

8. Hybridantriebsmodul (10) nach einem der vorhergehenden Ansprüche,
**dadurch gekennzeichnet, dass**
sich die zweite Seite (17) und die dritte Seite (18) jeweils seitlich gegenüberliegen.

9. Kraftfahrzeug mit einer Brennkraftmaschine (28), zumindest einem Elektromotor (12) und einem Hybridantriebsmodul (10) nach einem der vorhergehenden Ansprüche.

## Claims

1. Hybrid drive module (10) for a motor vehicle drive train, having at least one housing part (11) for the accommodation of at least one electric motor (12), at least one inverter (13), which is located on the housing part (11) and provided to act as a voltage transformer for the electric motor (12), a heat exchanger (14), which is located on the housing part (11) and provided to transmit thermal energy from a first cooling medium to a second cooling medium, and at least one coolant system, which is at least partially integrated into the housing part (11) and has at least one coolant port (15) for connection to a coolant line,
and having
a first side (16), where the inverter (13) is located, a second side (17), where the at least one coolant port (15) is located, and a third side (18), where the heat exchanger (14) is located,
wherein the first side (16), the second side (17), the third side (18) and a fourth side are oriented to be substantially perpendicular to an axis of rotation of a rotor (33) of the electric motor (12),
wherein the first side (16) is oriented downwards in a state installed into a motor vehicle, and wherein the second side (17) and the third side (18) lie opposite each other,
**characterised in that**
the housing part (11) has a flange (27) for the connection of the heat exchanger (14), which flange (27) has at least one coolant duct (50) provided to incorporate the heat exchanger (14) into the at least one coolant system.

2. Hybrid drive module (10) according to claim 1,
**characterised by**
a power connection (20) located on the second side (17) together with the coolant port (15).

3. Hybrid drive module (10) according to claim 2,
**characterised by**
a power line (21), which is at least partially integrated into the at least one housing part (11) and connects the power connection (20) and the inverter (13) to each other.

4. Hybrid drive module (10) according to any of the preceding claims,
**characterised in that**
the housing part (11) has at least one coolant passage (22), which connects the coolant port (15) and the heat exchanger (14) to each other.

5. Hybrid drive module (10) according to any of the preceding claims,
**characterised in that**
the inverter (13) has at least one housing base plate (23) provided to bound an inverter interior (24) for the accommodation of inverter electronics (25), and **in that** the housing part (11) has a recess which is closed off at least in the assembled state by the housing base plate (23).

6. Hybrid drive module (10) according to claim 5,
**characterised in that**
the inverter (13) has a connection-free housing end plate (41) provided to bound the inverter interior (24) in the direction of an environment.

7. Hybrid drive module (10) according to any of the preceding claims,
**characterised in that**
the at least one housing part (11) has at least two screw receptacles (45, 46, 47) for connection to an internal combustion engine case, which screw receptacles (45, 46, 47) are inclined with respect to a longitudinal direction (26).

8. Hybrid drive module (10) according to any of the preceding claims,
**characterised in that**
the second side (17) and the third side (18) are located laterally opposite each other.

9. Motor vehicle having an internal combustion engine (28), at least one electric motor (12) and a hybrid module (10) according to any of the preceding claims.

## Revendications

1. Module de propulsion hybride (10) pour une chaîne cinématique de véhicule à moteur, comprenant au moins une partie de carter (11) pour loger au moins un moteur électrique (12), comprenant au moins un onduleur (13) disposé sur la partie de carter (11), qui sert de convertisseur de tension pour le moteur électrique (12), comprenant un échangeur de chaleur (14) disposé sur la partie de carter (11), qui permet de transférer l'énergie thermique d'un premier fluide de refroidissement à un second fluide de refroidissement, et comprenant au moins un système de fluide de refroidissement intégré au moins à certains endroits dans la partie de carter (11), qui présente au moins un raccord de fluide de refroidissement (15) pour raccorder une conduite de fluide de refroidissement, et comprenant un premier côté (16) sur lequel est disposé l'onduleur (13), un deuxième côté (17) sur lequel est disposé ledit raccord de fluide de refroidissement (15) et un troisième côté (18) sur lequel est disposé l'échangeur de chaleur (14), le premier côté (16), le deuxième côté (17), le troisième côté (18) et un quatrième côté étant orientés sensiblement perpendiculairement à un axe de rotation d'un rotor (33) du moteur électrique (12), le premier côté (16) étant orienté vers le bas par rapport lorsqu'il est monté dans le véhicule à moteur et le deuxième côté (17) et le troisième côté (18) étant disposés en vis-à-vis, **caractérisé en ce que** la partie de carter (11) présente une bride (27) pour relier l'échangeur de chaleur (14), qui présente au moins un passage de fluide de refroidissement (50) qui sert à l'intégration de l'échangeur de chaleur (14) dans ledit système de fluide de refroidissement.

2. Module de propulsion hybride (10) selon la revendication 1, **caractérisé en ce qu'**une alimentation électrique (20) qui est disposée conjointement avec le raccord fluide liquide de refroidissement (15) sur le deuxième côté (17).

3. Module de propulsion hybride (10) selon la revendication 2, **caractérisé en ce qu'**au moins une conduite d'alimentation (21) intégrée au moins à certains endroits dans ladite partie de carter (11) qui relie l'alimentation électrique (20) et l'onduleur (13).

4. Module de propulsion hybride (10) selon l'une des revendications précédentes, **caractérisé en ce que** la partie de carter (11) présente au moins un canal de fluide de refroidissement (22) qui relie ensemble le raccord de fluide de refroidissement (15) et l'échangeur de chaleur (14).

5. Module de propulsion hybride (10) selon l'une quelconque des revendications précédentes, **caractérisé en ce que** l'onduleur (13) présente au moins une plaque de base de carter (23) qui sert à limiter un espace (24) interne de l'onduleur pour loger une électronique (25) de l'onduleur et la partie de carter (11) présente un évidement qui est fermé par la plaque de base de carter (23) au moins lorsqu'elle est montée.

6. Module de propulsion hybride (10) selon la revendication 5, **caractérisé en ce que** l'onduleur (13) présente une plaque de raccordement de carter (41) sans raccord qui sert à limiter l'espace intérieur de l'onduleur (24) dans le sens d'un environnement.

7. Module de propulsion hybride (10) selon l'une quelconque des revendications précédentes, **caractérisé en ce que** ladite partie de carter (11) présente au moins deux logements de vis (45, 46, 47) à fixer au carter de moteur à combustion interne qui sont inclinés par rapport à une direction longitudinale.

8. Module de propulsion hybride (10) selon l'une quelconque des revendications précédentes, **caractérisé en ce que** le deuxième côté (17) et le troisième côté (18) sont respectivement en vis-à-vis latéralement.

9. Véhicule à moteur comprenant un moteur à combustion interne (28), au moins un moteur électrique (12) et un module de propulsion hybride (10) selon l'une quelconque des revendications précédentes.
